# EUROPÄISCHE PATENTSCHRIFT

(11) **EP 0 985 888 B1**
(45) Veröffentlichungstag und Bekanntmachung des Hinweises auf die Patenterteilung: **04.06.2003**
(21) Anmeldenummer: 99117527.4
(22) Anmeldetag: 04.09.1999
(51) Int. Cl.: F24D 17/00, F24H 9/20

(54) **Installationseinrichtung zur Warmwasserversorgung einer Dusche**
Installation device for hot water production for a shower
Dispositif d'installation pour production d'eau chaude pour douche

(30) Priorität: 08.09.1998 DE 19840962
(43) Veröffentlichungstag der Anmeldung: 15.03.2000
(73) Patentinhaber: Comuna-metall Vorrichtungs- und Maschinenbau GmbH, 32051 Herford (DE)
(72) Erfinder: Vogelsang, Friedrich Wilhelm, 32051 Herford (DE)
(74) Vertreter: Elbertzhagen, Otto, Dipl.-Ing.

(56) Entgegenhaltungen:
- DE-A- 3 919 543
- DE-U- 29 615 555
- PATENT ABSTRACTS OF JAPAN vol. 009, no. 055 (M-362), 9. März 1985 (1985-03-09) & JP 59 189236 A (MATSUSHITA DENKI SANGYO KK), 26. Oktober 1984 (1984-10-26)

## Beschreibung

Die Erfindung bezieht sich auf eine Installationseinrichtung zur Warmwasserversorgung einer Dusche mit einem Durchlauferhitzer, dessen Leistung an eine konstante Temperatur des Wassers am Erhitzerauslauf geregelt ist.

Durch das deutsche Gebrauchsmuster DE 296 15 555 U1 ist ein Duschsystem bekannt, bei dem in die Abwasserablaufleitung der Dusche ein Wärmetauscher eingefügt ist, durch den die zum Durchlauferhitzer hinführende Frischwasserzuleitung zwecks Vorwärmung des Frischwassers hindurchführt. Auf diese Weise kann ein Teil der im Ablaufwasser steckenden Wärme zurückgewonnen werden.

Aus dem deutschem Gebrauchsmuster DE 89 16 015 U1 geht ebenfalls eine solche Duscheinrichtung mit Wärmetauscher und Durchlauferhitzer hervor, die zusätzlich eine Regelelektronik aufweist, um trotz unterschiedlicher Temperatur des zulaufenden Frischwassers und unterschiedlicher Durchflußmenge eine eingestellte Solltemperatur des Duschwasser zu halten. Somit kann in der Startphase die noch nicht verfügbare Rückwärme aus dem Abwasser kompensiert werden, ohne daß im eingeschwungenen Zustand eine Überhitzung des Duschwassers auftritt.

Bei bekannten Einrichtungen der vorgenannten Art ist der Nennstrom des Durchlauferhitzers und damit dessen Nennleistung an die zulässige Dauerstrombelastbarkeit der elektrischen Zuleitungen und Sicherungsorgane einer üblichen Hausinstallation angepaßt. Der Durchlauferhitzer ist mit seinem Frischwasserzulauf unmittelbar an das Wasserversorgungsnetz angeschlossen und wird deshalb mit dem üblichen Kaltwasser gespeist, welches zumindest bis auf die gewünschte Duschtemperatur erwärmt, in der Regel noch darüberhinaus erhitzt wird, damit mittels einer Mischbatterie die jeweils gewünschte Wassertemperatur und -menge zum Duschen eingestellt werden kann. Wegen des entsprechend benötigten, hohen Wärmebedarfs muß der Durchlauferhitzer auch im Dauerbetrieb mit voller Nennleistung betrieben werden können, damit auch bei maximaler Durchflußmenge das kalte Frischwasser auf die für das Duschen benötigte erhöhte Temperatur aufgewärmt werden kann.

Die Erfindung geht von der Überlegung aus, einen erheblichen Teil derjenigen Wärme zurückzugewinnen, die ansonsten mit dem ablaufenden, verbrauchten Duschwasser verlorenginge. Die dem ablaufenden Duschwasser entziehbare Wärme soll dazu genutzt werden, das dem Durchlauferhitzer zuzuleitende Frischwasser vorzuwärmen. In der Start- oder Anlaufphase des Duschens kann die beabsichtigte Wärmerückgewinnung jedoch noch nicht einsetzen, weil erst einmal warmes, ablaufendes Duschwasser zur Verfügung stehen muß, womit sich erst nach Beendigung der Startphase ein eingeschwungener Zustand einstellt, der eine kontinuierliche Vorwärmung des dem Durchlauferhitzer zugeleiteten Frischwassers zuläßt.

Der Erfindung liegt nun die Aufgabe zugrunde, eine Vorrichtung der gattungsgemäßen Art zu schaffen, die nicht nur die Rückgewinnung eines Teils der Wärme aus dem ablaufenden Duschwasser ermöglicht, sondern darüberhinaus noch die verzögerte Wärmerückgewinnung in der Start- bzw. Anlaufphase kompensiert.

Diese Aufgabe wird bei einer Vorrichtung zur Warmwasserversorgung einer Dusche der gattungsbildenden Art nach der Erfindung durch die kennzeichnenden Merkmale des Patentanspruchs 1 gelöst.

Für die Erfindung ist wesentlich, daß in der Startphase des Duschvorganges, solange die Wärmerückgewinnung noch nicht oder noch nicht voll eingesetzt hat, schon ausreichend erwärmtes Duschwasser zur Verfügung steht, ohne daß die dem Durchlauferhitzer vorgeschaltete Elektroinstallation in schädigender Weise überlastet wird. Denn die Wärmerückgewinnung ermöglicht es, im eingeschwungenen Zustand den Durchlauferhitzer mit der an sich überdimensionierten Nennleistung so zu betreiben, daß die vorgeschalteten elektrischen Zuleitungen und Schutzorgane, wie Sicherungen, nicht überlastet werden. Die Startphase jedoch kann aufgrund der schnell einsetzenden Wärmerückgewinnung zeitlich so kurz gehalten werden, daß aufgrund des während dieser Phase vom Durchlauferhitzer gezogenen Stromes sich die elektrischen Zuleitungen nicht unzulässig erwärmen und die träge ausgelegten Schutzorgane noch nicht ansprechen. Entsprechend wird der Durchlauferhitzer nur zu Beginn der Startphase mit seiner vollen Nennleistung betrieben, im eingeschwungenen Zustand wird er mit verminderter, angepaßter Leistung gefahren, die für die vorhandene Elektroinstallation unschädlich ist und die infolge der eingesetzten Wärmerückgewinnung ausreicht, um das Duschwasser auf die gewünschte Temperatur zu bringen.

Man kann mit der erfindungsgemäßen Vorrichtung zwei unterschiedliche Ziele verfolgen. Zum einen kann man dort, wo eine ausreichend belastbare Elektroinstallation zur Verfügung steht, wie beispielsweise in Neubauten, mit dem Einsatz eines leistungsstarken Durchlauferhitzers eine Komfortverbesserung erreichen. Aber vor allem auch bei einer vorhandenen, nur begrenzt belastbaren Leitungsinstallation mit entsprechender Absicherung, wie sie oft in Altbauten vorzufinden ist, läßt sich noch durch die Kombination von Wärmerückgewinnung und Überlastbetrieb in der kurzzeitigen Startphase ein ausreichender Duschkomfort unter Einsatz eines Durchlauferhitzers realisieren.

Man erreicht dann eine optimale Auslegung der erfindungsgemäßen Vorrichtung, wenn die Strombegrenzerschaltung den Strom des Durchlauferhitzers in der Startphase entlang einer Kennlinie abregelt, deren Verlauf derjenigen der Temperaturzunahme des Wassers am Erhitzerzulauf oder -auslauf umgekehrt proportional ist. Es ist dann sichergestellt, daß auch bei unterschiedlich benötigten Wassermengen die passende Wassertemperatur zur Verfügung steht. Will man allerdings die über den Durchlauferhitzer entnehmbare Wassermenge nicht begrenzen, weil z.B. am Erhitzerauslauf mehrere Zapfstellen angeschlossen sein könnten, wie die eines Waschbeckens, dann müssen Vorkehrungen zur Vermeidung einer Schädigung der Elektroinstallation durch andauernde Überlast getroffen werden. Dies gilt auch für den Fall, daß die beabsichtigte Wärmerückgewinnung blockiert ist, wie z.B. durch ein verstopftes Sieb am Wasserablauf der Duschwanne. Deshalb wird hierzu in der Strombegrenzungsschaltung eine Grenzwertkennlinie für maximale Stromwerte des vom Durchlauferhitzer gezogenen Stromes eingeprägt. Diese Grenzwertkennlinie ist gegenüber der temperaturabhängigen Kennlinie vorrangig, und sie repräsentiert die Grenzbelastbarkeit der elektrischen Zuleitung sowie der Schaltorgane, die dem Durchlauferhitzer vorgeordnet sind. Der Effekt dieser Sicherungsmaßnahme ist, daß bei Entnahme einer größeren Wassermenge gegenüber derjenigen Wassermenge, bis zu der hin die Überlastbarkeit der Elektroinstallation in der Startphase funktioniert, die Wassertemperatur am Auslauf des Durchlauferhitzers abfällt. Dies muß auch für den eingeschwungenen Zustand vorgesehen werden, um bei erhöhtem Wasserbedarf nicht in den Betriebszustand der Start- oder Anlaufphase mit erhöhtem Strombedarf des Durchlauferhitzers zurückzufallen.

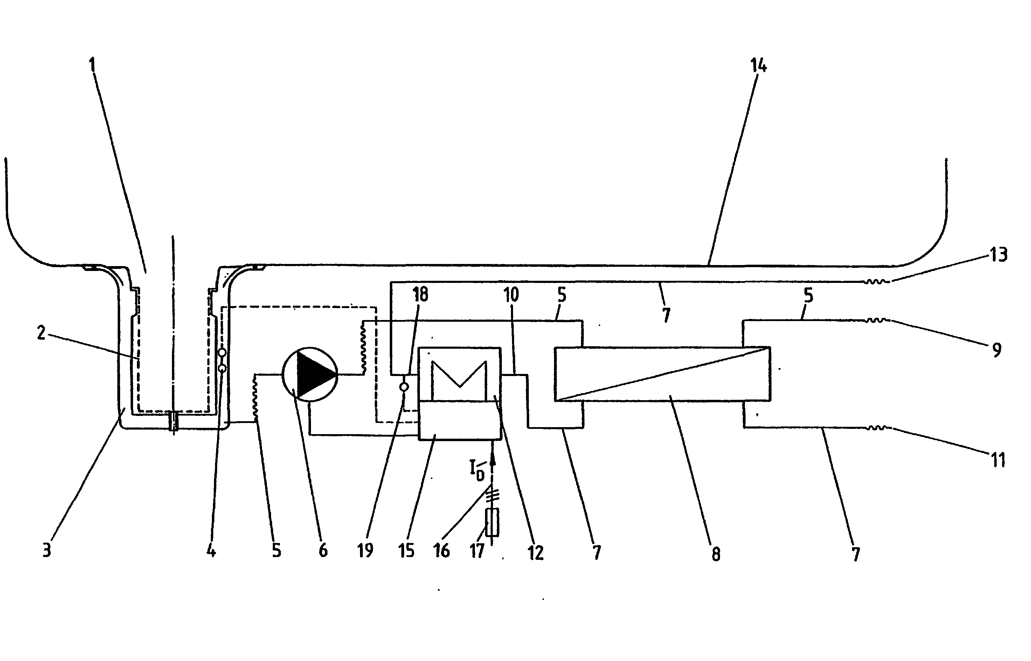

Die Erfindung wird nachfolgend anhand der Zeichnung an einem Ausführungsbeispiel noch näher erläutert. Die Zeichnung zeigt in schematischer Wiedergabe die Gesamtanordnung einer Warmwasserversorgung einer Dusche mit Wärmerückgewinnung.

Die Zeichnung zeigt im einzelnen den Bodenteil 14 einer Duschwanne, der an seiner tiefsten Stelle einen Wasserablauf 1 hat. Der Wasserablauf 1 mündet in einen Sumpf 3, der ein Sieb 2 aufnimmt. Das verbrauchte Duschwasser kann aus dem Sumpf 3 über eine Wasserablaufleitung 5 abgezogen werden, wozu in die Wasserablaufleitung 5 eine Pumpe 6 eingefügt ist. Die Wasserablaufleitung 5 führt weiter in einen Wärmetauscher 8, dessen vom Duschwasser durchflossenes System zu einem Wasserablaufanschluß 9 führt, der mit einem vorhandenen Abwassersystem verbunden wird.

Im Wärmetauscher 8 wird dem ablaufenden Duschwasser Wärme entzogen, um damit das der Dusche oder einer vorgeschalteten Mischbatterie zuzuleitende Frischwasser vorzuwärmen. Über einen Frischwasseranschluß 11 und eine Frischwasserzuleitung 7 gelangt das Frischwasser in den Wärmetauscher 8, von wo die Frischwasserzuleitung 7 über einen Frischwasserzulauf 10 in einen Durchlauferhitzer 12 führt. Von dort führt die Frischwasserzuleitung 7 zu einem Anschluß 13, der mit der Dusche oder mit einer der Dusche vorgeschalteten Mischbatterie zu verbinden ist.

Der Durchlauferhitzer 12 hat auslaßseitig einen Erhitzerauslauf 18, an dem ein Temperatursensor 19 angeordnet ist. An den Durchlauferhitzer 12 ist eine Strombegrenzerschaltung 15 angegliedert, die lediglich als Blocksymbol angedeutet ist. Die Strombegrenzerschaltung 15 steuert den Durchlauferhitzer 12 so, daß möglichst am Erhitzerauslauf 18 eine konstante Wassertemperatur gehalten wird, die vom Temperatursensor 19 erfaßt wird.In gleicher Weise kann eine Temperaturerfassung am Erhitzerzulauf 10 vorgesehen werden, um den Erhitzer 12 entsprechend der Vorwärmung des ihm zugeleiteten Wassers zu steuern. Je mehr das über die Frischwasserzuleitung 7 dem Durchlauferhitzer 12 zugeführte Frischwasser im Wärmetauscher 8 vorgewärmt worden ist, mit umso geringerer Leistung und entsprechend vermindertem Strom wird der Durchlauferhitzer 12 betrieben. Eine Zusatzeinrichtung in der Strombegrenzerschaltung 15 steuert auch die Pumpe 6 in Abhängigkeit von einem Füllstandssensor 4 im Sumpf 3, weil dann erst das ablaufende Duschwasser durch den Wärmetauscher 8 geschickt werden kann, wenn hiervon im Sumpf 3 genügend zur Verfügung steht.

Der Durchlauferhitzer 12 ist über eine elektrische Leitung 16, die Teil einer üblichen Hausinstallation ist, an das elektrische Versorgungsnetz angeschlossen; entsprechend ihrer Kapazität ist der Leitung 16 ein Schutzorgan 17, nämlich eine Sicherung, vorgeschaltet. Bei eingeschaltetem Durchlauferhitzer 12 fließt in der elektrischen Leitung 16 ein Strom I_{D}, der von der Strombegrenzerschaltung 15 entlang vorgegebener Kennlinien variiert wird. Die elektrische Leitung 16 und das Schutzorgan 17 sind für einen maximalen, dauernden Laststrom ausgelegt, der kurzzeitig ohne weiteres um ein Mehrfaches überschritten werden kann, ohne daß die Leitung 16 infolge unzulässiger Erwärmung Schaden leidet und das Schutzorgan 17 aufgrund seiner Trägheit anspricht. Folglich kann in der kurzen Start- oder Anlaufphase der Strom I_{D,} den der Durchlauferhitzer 12 zieht, wesentlich größer als der maximal verträgliche Dauerstrom sein, wenn nur die Strombegrenzerschaltung 15 den vom Durchlauferhitzer 12 gezogenen Strom rechtzeitig abregelt. Insoweit kann die Nennleistung und damit der Nennstrom des Durchlauferhitzers 12 bezogen auf die in der Leitung 16 und über das Schutzorgan 17 übertragbare Dauerleistung überdimensioniert werden, was es ermöglicht, auch dann schon am Erhitzerauslauf 18 die für das Duschen benötigte Wassertemperatur zur Verfügung zu stellen, wenn mangels ablaufenden Duschwassers von der Pumpe 6 noch kein erwärmtes Wasser zwecks Wärmerückgewinnung durch den Wärmetauscher 8 geschickt werden kann.

Die Strombegrenzerschaltung 15 regelt den elektrischen Strom für den Durchlauferhitzer 12 nach Möglichkeit so, daß am Erhitzerauslauf 18 eine vorgegebene Temperatur des Frischwassers eingehalten wird. Vorrangig wird jedoch eine Grenzwertkennlinie für maximale Stromwerte des vom Durchlauferhitzer 12 gezogenen Stromes I_{D} eingehalten, um in gar keinem Fall, wenn kein ablaufendes Duschwasser zur Verfügung stehen sollte oder eine zu große Wassermenge abgefordert wird, die elektrische Leitung 16 und das vorgeschaltete Schutzorgan 17 zu überlasten.

## Patentansprüche

1. Installationseinrichtung zur Warmwasserversorgung einer Dusche mit einem Durchlauferhitzer (12) mit elektrischer Zuleitung und vorgeschalteten Schutzorganen, dessen Leistung auf eine konstante Temperatur des Wassers am Erhitzerauslauf geregelt ist, wobei in die Wasserablaufleitung (5) der Dusche ein Wärmetauscher (8) eingefügt ist, durch den die zum Durchlauferhitzer (12) hinführende Frischwasserzuleitung (7) zwecks Vorwärmung des Frischwassers ebenfalls hindurchgeführt ist,
**dadurch gekennzeichnet,**
**daß** der Nennstrom des Durchlauferhitzers (12) höher als der zulässige Dauerstrom der elektrischen Zuleitung (16) sowie der vorgeschalteten Schutzorgane (17) ausgelegt ist, wobei eine Strombegrenzerschaltung (15) in jeder Startphase den vom Durchlauferhitzer (12) gezogenen Strom (I_{D}) innerhalb einer vorbestimmten, an die Erwärmungszeitkonstante der elektrischen Zuleitung (16) sowie der Schutzorgane (17) angepaßten Zeitdauer bis zumindest auf den zulässigen Dauerstrom abregelt.

2. Installationseinrichtung nach Anspruch 1,
**dadurch gekennzeichnet,**
**daß** die Strombegrenzerschaltung (15) den Strom (I_{D}) des Durchlauferhitzers (12) in der Startphase entlang einer Kennlinie abregelt, deren Verlauf derjenigen der Temperaturzunahme des Wassers am Erhitzerauslauf (18)oder am Erhitzerzulauf (10) umgekehrt proportional ist.

3. Installationseinrichtung nach Anspruch 2,
**dadurch gekennzeichnet,**
**daß** in der Strombegrenzungsschaltung (15) eine Grenzwertkennlinie für maximale Stromwerte des vom Durchlauferhitzer gezogenen Stroms (I_{D}) eingeprägt ist, die gegenüber der temperaturabhängigen Kennlinie für die Stromabregelung vorrangig ist und welche der Grenzbelastbarkeit der elektrischen Zuleitung (16) sowie der Schutzorgane (17) nachgebildet ist, wobei der Strom (I_{D}) bei Erreichen des jeweiligen Maximalwertes entlang dieser Grenzwertkennlinie abgeregelt wird.

## Claims

1. Installation for the hot water supply of a shower with a through-flow heater (12) with electrical supply and protection members arranged upstream of the heater, wherein the output of the heater (12) is regulated to produce a constant temperature of the water at the heater outlet and wherein a heat exchanger (8) is incorporated in the water outlet pipe, through which the fresh water supply main (7) leading to the through-flow heater (12) is likewise guided for the purpose of pre-heating of the fresh water,
**characterised in that**
the nominal current of the through-flow heater (12) is designed to be higher than the allowable continuous current of the electrical supply main (16) as well as the protection members (17) arranged upstream of the heater, wherein a current limiting circuit (15) regulates in each start phase the current (I_{D}) drawn by the through-flow heater (12) within a pre-determined period of time adapted to the heating time constant of the electrical supply main (16) and the protection members (17) at least as far as the allowable continuous current.

2. Installation device according to Claim 1,
**characterised in that**
the current limiting circuit (15) regulates the current (I_{D}) of the through-flow heater (12) in the start phase along a characteristic curve which runs inversely proportional to that of the temperature increase of the water at the heater outlet (18) or at the heater inlet (10).

3. Installation device according to Claim 2,
**characterised in that**
a threshold value characteristic curve for maximum current values of the current (I_{D}) drawn by the through-flow heater is incorporated into the current limiting circuit (15) which takes precedence in relation to the temperature dependent characteristic curve for the current regulation and which reproduces the threshold load capacity of the electrical supply main (16) and of the protection members (17) wherein the current (I_{D}) is regulated when the respective maximum value along this threshold value characteristic curve is reached.

## Revendications

1. Dispositif d'installation pour la production d'eau chaude pour une douche, avec un chauffe-eau instantané (12), avec une conduite électrique et des organes de protection connectés en amont, dont la puissance est réglée à une température constante de l'eau à la sortie du chauffe-eau, un échangeur thermique (8) étant incorporé dans la conduite de sortie de l'eau (5) de la douche, la conduite d'amenée d'eau fraîche (7), conduisant au chauffe-eau instantané (12) passant également par ledit échangeur thermique,
**caractérisé en ce que**
le courant nominal du chauffe-eau instantané (12) est plus élevé que le courant permanent admissible de la ligne électrique d'alimentation (16) ainsi que des organes de protection (17) connectés en amont, lors de chaque phase de lancement, un circuit limiteur de courant (15) règle le courant (I_{D}) prélevé par le chauffe-eau instantané (12), pendant une durée prédéfinie, adaptée à la constante de temps de chauffage de la ligne électrique d'alimentation (16) ainsi que des organes de protection (17), au moins jusqu'au courant permanent admissible.

2. Dispositif d'installation selon la revendication 1,
**caractérisée en ce que**
le circuit limiteur de courant (15) régule le courant (I_{D}) du chauffe-eau instantané (12), pendant la phase de lancement, le long d'une courbe caractéristique dont le déroulement est inversement proportionnel à celui de l'augmentation de température de l'eau à la sortie (18) du chauffe-eau instantané (18) ou à l'amenée (10) au chauffe-eau instantané (10).

3. Dispositif d'installation selon la revendication 2,
**caractérisé en ce que**,
dans le circuit limiteur de courant (15), une courbe caractéristique de valeur limite pour les valeurs maximales du courant (I_{D}) prélevé par le chauffe-eau instantané est mémorisée, laquelle est prioritaire, par rapport à la courbe caractéristique dépendante de la température, pour la régulation du courant et suit la charge limite de la ligne électrique d'alimentation (16) ainsi que des organes de protection (17), le courant (I_{D}) étant limité par réglage lorsque que la valeur maximale respective est atteinte le long de cette courbe caractéristique de valeur limite.
